# EUROPEAN PATENT APPLICATION

(11) **EP 0 909 928 A1**
(43) Date of publication of application: **21.04.1999**
(21) Application number: 98203463.9
(22) Date of filing: 14.10.1998
(51) Int. Cl.: F24F 12/00

(54) **Heat recovery unit**

(30) Priority: 17.10.1997 NL 1007309
(71) Applicant: APPARATENFABRIEK WARMTEBOUW B.V., 5740 AA Beek en Donk (NL)
(72) Inventor: van Ophoven, Paulus Gerardus Anton Alphonsis, 6367 BD Voerendaal (NL)
(74) Representative: Eveleens Maarse, Pieter

(57) **Abstract**

The invention relates to a heat recovery unit (7) for transferring heat from an air flow leaving a building to an air flow entering the building, comprising: a first supply connection (8) for supplying the air flow leaving the building to the heat recovery unit (7); a first discharge connection (9) for discharging from the heat recovery unit (7) the air flow leaving the building; a second supply connection (11) for supplying to the heat recovery unit (7) the air flow entering the building; a second discharge connection (13) for discharging from the heat recovery unit (7) the air flow entering the building; a primary heat-transfer element (20) comprising dividing walls (21) and guide means for guiding respective air flows on either side of the dividing walls (21); and a first fan (22) for propelling the air flow leaving the building, wherein the heat recovery unit (7) is provided with a secondary heat transfer element (24) which is adapted to guide the flue gases coming from a heating device, and wherein the secondary heat transfer element (24) is placed between the primary heat transfer element (20) and the second discharge connection (13), so that the flue gases transfer at least a part of their heat to the gas flow entering the house.

## Description

The invention relates to a heat recovery unit for transferring heat from an air flow leaving a building to an air flow entering the building, comprising: a first supply connection for supplying the air flow leaving the building to the heat recovery unit; a first discharge connection for discharging from the heat recovery unit the air flow leaving the building; a second supply connection for supplying to the heat recovery unit the air flow entering the building; a second discharge connection for discharging from the heat recovery unit the air flow entering the building; a primary heat-transfer element comprising dividing walls and guide means for guiding respective air flows on either side of the dividing walls; and a first fan for propelling the air flow leaving the building.

Such heat recovery units are known from CA-A-2 140 232.

These are intended for installation in for instance a dwelling in order to make the heat loss due to ventilation of the dwelling as small as possible. For this purpose the heat recovery unit is adapted so that the air flow leaving the house heats the air flow entering the house.

Such a heat recovery unit is usually placed in the proximity of the heating device for a house, for instance a central heating boiler.

It will be apparent that even with high efficiency boilers, wherein the temperature of the flue gases is low, there is nevertheless a temperature gradient between the flue gases leaving the heating device and the air flow entering the house.

The object of the present invention is to provide a method wherein an efficient use is made of heat present in the flue gases.

This object is achieved in that the heat recovery unit is provided with a secondary heat transfer element which is adapted to guide the flue gases coming from a heating device and wherein the secondary heat transfer element is placed between the primary heat transfer element and the second discharge connection, so that the flue gases transfer at least a part of their heat to the gas flow entering the house.

The heat in the flue gases is herein used efficiently.

According to a preferred embodiment, the first fan is arranged between the first supply connection and the primary heat transfer element.

As a result of these measures, the exiting air flow inside the house is heated by the losses occurring in the fan, this such that it reaches a higher temperature. In the subsequent heat transfer element the transfer of the air flow leaving the building to the air flow entering the building can take place in a more effective manner; the energy content of the air flow leaving the house is however higher, while the temperature level is also higher.

Use is made in some situations of a second fan. This second fan is then arranged in the air flow entering the house. To also enable effective use of the losses of this second fan, this second fan is arranged between the primary heat transfer element and the second discharge connection. The losses of the fan are thus transferred directly to the air flow entering the building.

Other attractive embodiments are stated in the remaining sub-claims.

The present invention will be elucidated hereinbelow with reference to the annexed drawings in which:
figure 1 shows a schematic cross-sectional view of a building, wherein the heat recovery unit according to the present invention is applied;
figure 2 shows a partly broken-away schematic perspective view of an embodiment of a heat recovery unit according to the present invention; and
figure 3 is a detailed cross-sectional view of the plate heat recovery unit applied in the device according to the invention.

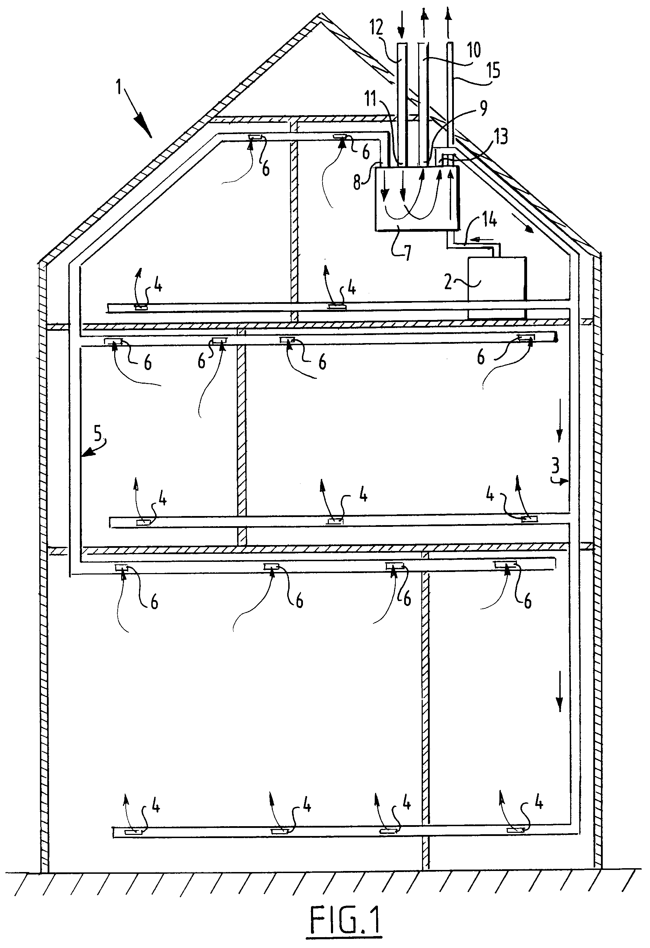

Figure 1 shows a building 1 in the form of a house 1 in which a central heating device 2 is arranged, for instance in the form of a central heating boiler. It will be apparent that instead of central heating boilers other types of heating appliance may be used, for instance hot-air heating. As is usual, house 1 is provided with a ventilation system. For this purpose a duct system 3 is arranged in the house for supplying fresh air entering the house, in which supply duct system are arranged supply openings 4, while the house is also provided with a discharge duct system 5 in which discharge openings 6 are arranged. According to the prior art both duct systems 3,5 are directly connected to the environment, for instance via a through-feed in the roof. Use can herein be made of mechanical ventilation. It is also possible to make use of a thus formed ventilation system provided with fewer ducts.

As stated, the heat in the air flow leaving the building is used according to the invention to heat the air flow entering the building. Use is made for this purpose of a heat recovery unit 7. This latter is provided with a first supply connection 8, onto which the duct system 5 is connected for feeding to the heat recovery unit the air flow leaving the building and with a first discharge connection 9 for discharging from the heat recovery unit the air flow leaving the building. The first discharge connection 9 is connected to a pipe 10 which, as shown in figure 1, extends through the roof to the outside.

The heat recovery unit is further provided with a second supply connection 11 for supplying the air flow entering the building. This connection 11 is connected to a pipe likewise extending through the roof. The heat recovery unit is further provided with a second discharge connection 13 for discharging the air flow entering the building.

The preferred embodiment of the invention depicted here is further provided with a secondary heat recovery unit, not shown in figure 1, to which the flue gases of central heating boiler 2 are fed by means of a duct 14. These gases then exit the building via the conventional chimney 15.

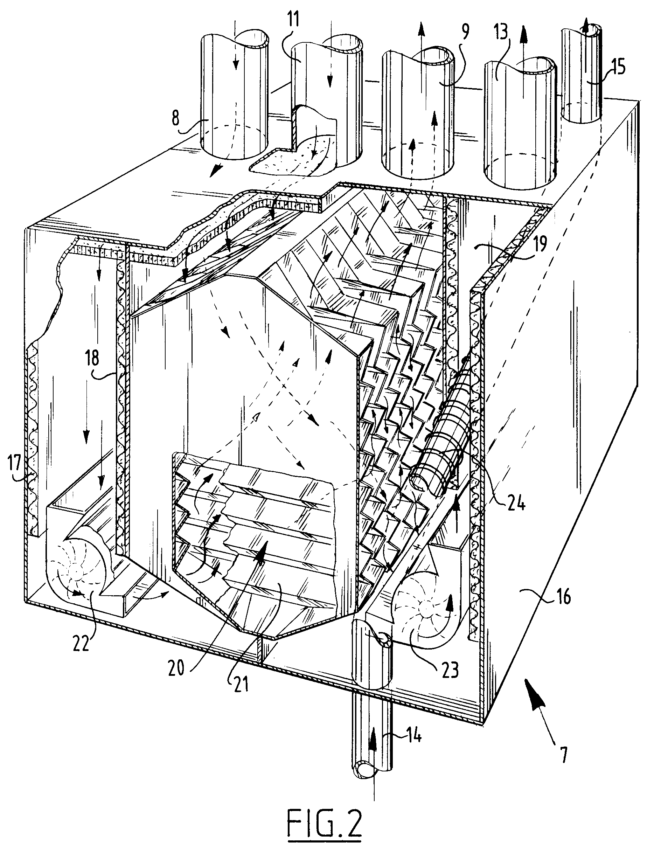

The invention will now be further elucidated with reference to figure 2.

The device according to the present invention is formed by a rectangular housing, the walls of which are for instance manufactured from steel plate and provided on their inside with an insulation layer 17. The housing is divided by two dividing walls 18 respectively 19 into three compartments, wherein dividing walls 18 and 19 extend from the top to a position at some distance from the bottom wall. The actual heat recovery unit in the form of a plate heat exchanger 20 is arranged between walls 18 and 19. This is formed by plates which extend substantially parallel to each other and are arranged at a short mutual distance and through each of which a heat-relinquishing or heat-absorbing flow streams on either side. For this purpose the spaces between the plates are alternately closed to the heat-relinquishing and the heat-absorbing air flow. The constructions required for this purpose are known and form no part of the present invention. The first supply connection 8 of the air leaving the building debouches into the first compartment between outer wall 17 and dividing wall 18. Arranged on the underside at the position of the lower end of wall 18 is a fan 22 which propels the air flow leaving the house and urges it into the actual heat exchanger 20. The air exiting the heat recovery unit having relinquished its heat leaves the heat recovery unit via the first discharge connection 9.

It is noted here that the energy which is dissipated in fan 22 is transferred to the air flow entering the heat recovery unit so that this heat can be transferred in effective manner to the heat recovery unit together with the heat already present in the air flow.

The air flow entering the house enters heat recovery unit 7 via the second supply connection 11, herein flows into the actual heat exchanger 20, leaves this latter on the underside and is urged via the second fan 23 into the third compartment between dividing wall 19 and outer wall 16. This air flow entering the house is herein heated in the actual heat exchanger 20, while the losses of fan 23 are also carried into this air flow entering the house. After having passed through the relevant compartment, this air flow leaves heat recovery unit 7 via the second discharge connection 13.

In the space between the dividing wall 19 and the outside of the housing a secondary heat recovery unit is finally arranged in the form of the pipe between discharge pipe 14 and discharge duct 15. This pipe 24 serves as secondary heat recovery unit and for this purpose is provided on its periphery with rings for enlarging the heat-relinquishing surface. It is thus possible to transfer residual heat from the flue gases to the air flow entering the house.

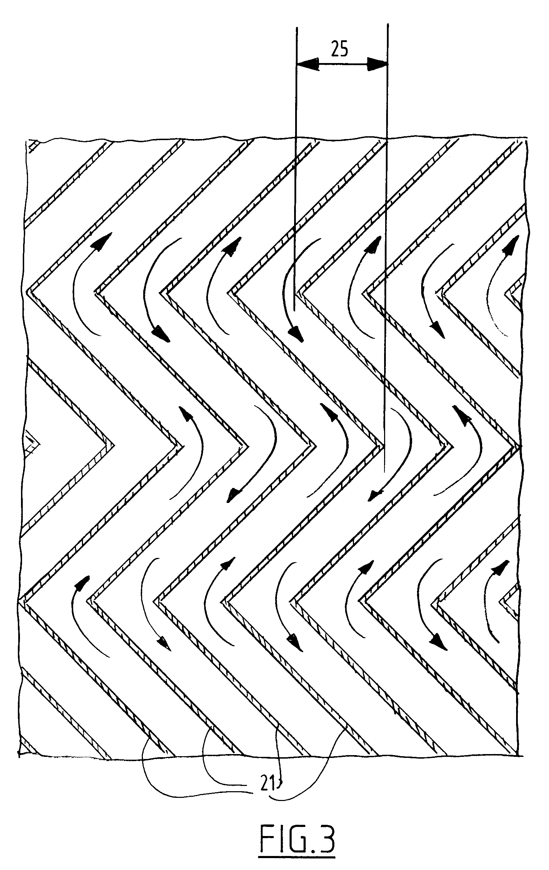

Figure 3 shows a cross-section of the actual heat exchanger. This shows that the two air flows are each guided between the two zigzag-shaped plates. This zigzag form of the plates results on the one hand in an enlarging of the heat-transferring surface, but results on the other hand in a deforming of the air flow such that laminar flow is prevented and the air flow becomes turbulent. The effectiveness of the heat transfer is hereby greatly increased. What is important here is that the edges of the plates bent in Zigzag shape fit into each other, as visualized by means of arrow 25 in figure 3. In other words, the distance between the plates mutually is smaller than the dimension of the profile in the direction transversely of the main plane of the plates. This results in a very attractive heat-transfer factor.

## Claims

1. Heat recovery unit for transferring heat from an air flow leaving a building to an air flow entering the building, comprising:
- a first supply connection for supplying the air flow leaving the building to the heat recovery unit;
- a first discharge connection for discharging from the heat recovery unit the air flow leaving the building;
- a second supply connection for supplying to the heat recovery unit the air flow entering the building;
- a second discharge connection for discharging from the heat recovery unit the air flow entering the building;
- a primary heat-transfer element comprising dividing walls and guide means for guiding respective air flows on either side of the dividing walls; and
- a first fan for propelling the air flow leaving the building,
**characterized in that** the heat recovery unit is provided with a secondary heat transfer element which is adapted to guide the flue gases coming from a heating device, and wherein the secondary heat transfer element is placed between the primary heat transfer element and the second discharge connection, so that the flue gases transfer at least a part of their heat to the gas flow entering the house.

2. Heat recovery unit as claimed in claim 1, **characterized in that** the first fan is arranged between the first supply connection and the primary heat transfer element.

3. Heat recovery unit as claimed in claim 2, **characterized in that** a second fan for propelling the air flow entering the building is arranged between the primary heat transfer element and the second discharge connection.

4. Heat recovery unit as claimed in any of the foregoing claims, **characterized in that** the secondary heat transfer element is placed between the second fan and the second discharge connection.

5. Heat recovery unit as claimed in any of the foregoing claims, **characterized in that** the secondary heat transfer element comprises a pipe which is adapted to guide the flue gases of the heating device and which is placed in a duct through which flows the air flow entering the house, and that the pipe is provided on its outside with ribs enlarging the outer surface.

6. Heat recovery unit as claimed in any of the foregoing claims, **characterized in that** the heat recovery unit is placed in a substantially rectangular housing provided with at least three compartments, that the primary heat transfer device is placed in the centre compartment and that both fans are placed in the side compartments.

7. Heat recovery unit as claimed in any of the foregoing claims, **characterized in that** the primary heat transfer element comprises a plate heat exchanger.

8. Heat recovery unit as claimed in claim 7, **characterized in that** the plates are bent in a zigzag profile and that the distance between the plates mutually is smaller than the dimensions of the profile in the direction transversely of the main plane of the plates.
